# EUROPEAN PATENT SPECIFICATION

(11) **EP 0 604 227 B1**
(45) Date of publication and mention of the grant of the patent: **26.08.1998**
(21) Application number: 93310453.1
(22) Date of filing: 23.12.1993
(51) Int. Cl.: B01D 39/08, B01D 29/01, B01D 29/11

(54) **Improvements relating to filters**
Verbesserungen an Filtern
Perfectionnements aux filtres

(30) Priority: 23.12.1992 GB 9226769
(43) Date of publication of application: 29.06.1994
(73) Proprietor: CAMPLAS TECHNOLOGY LIMITED, Bridgend Mid-Glamorgan CF31 2AL (GB)
(72) Inventor: Williams, Anthony Carey, Bridgend, Mid Glamorgan CF32 OHE (GB)
(74) Representative: James, Michael John Gwynne

(56) References cited:
- DE-A- 2 406 243
- DE-A- 2 815 531
- FR-A- 2 533 498
- US-A- 3 815 341

## Description

Problems arise in providing adequate support for filter structures, particularly where the filters have a large surface area and/or have to operate at high pressures so that conventional support members become complex, heavy and expensive to fabricate.

US-A-3815341 discloses a supported filter comprising a fibrous knitted fabric of meshed structure serving as a support base for fixing a filtering material which is synthetic flock fibres. A coat of an adhesive, such as a synthetic resin, is impregnated or otherwise applied onto the meshed support base and then the filter material is applied against said base. The supported filter is then dried and cured in order to bond the support base to the filter material. DE-A-240643 discloses a reinforced filter comprising a layer of filter material integrated with an open-grid reinforcing frame which is glued, or otherwise adhered, on to filtering material. The reinforcing frame may be made of a textile or any suitable system of fibres. Neither of these arrangements is capable of creating a rigid support structure for filter structures which may be of various shapes.

According to one aspect of the present invention there is provided a method of forming a supported filter, wherein a layer of filter material is laid over a table or around a mandrel and individual bundles of resin impregnated fibres are laid over the filter member and overlaid over one another to create an open grid stucture under controlled tension so that some of the resin is impregnated into the filter material, whereby the fibres create a support structure for the filter material, after curing.

According to a further aspect of the invention there is provided a method of forming a supported filter, wherein individual bundles of resin impregnated fibres are laid over a table or around a mandrel and overlaid over one another to create an open grid structure under controlled tension and a layer of filter material is laid over the fibres under tension so that some of the resin is impregnated into the filter material, whereby the fibres create a support structure for the filter material, after curing.

The integration of the filter material with the support structure by bonding these two parts together results in a very secure support of the filter material whilst the support structure itself can be relatively light in weight. The support structure could be in the form of a cage, perforated tube or frame for supporting a filter of cylindrical or flat form or a filter having a non-symmetrical shape or topography. In most constructions it is envisaged that the openings in the support structure will generally be in the form of diamonds or rectangles.

The foraminous material for the filter medium may be of any convenient form and may for example be constructed as woven or non-woven cloth, mesh or tissue or any filter-type fabric. One possibility is a plastic, ceramic or other similar material which is applied directly to the mandrel by, for example spraying, which is finely porous by nature or becomes porous during its application. Such a sheet with minute holes is particularly advantageous for fine filtration operation.

For added strength or for particular purposes the support structure and filter material could be built up in multiple layers. Thus, for example, a layer of filter material can be carried between two support structure layers. Alternatively, layers of filter material can be supported on either side of a single support structure. Many more layers may be built up if desired. For increased strength, layers of fibre bundles can be built up one on top of the other. In order to combat the possibility that several such layers of fibre bundles might tend to flatten out the arrangement could be such that one fibre bundle is pre-wound around another fibre bundle.

If desired, external pressure could be applied to force the resin into the filter material.

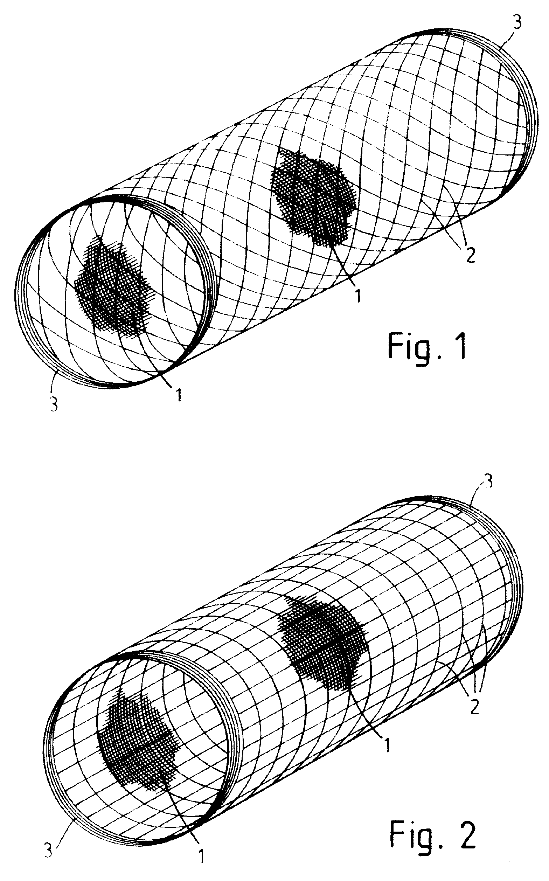

The invention may be performed in various ways and a preferred embodiment will now be described, by way of example, with reference to the accompanying drawings, in which:-
Figures 1 and 2 are perspective views of two alternative views of a supported filter structure in accordance with this invention.

In the arrangement shown in Figure 1 a sheet of filter medium 1 is laid down, wound round or sprayed onto a rotating mandrel so as to create a complete sleeve. Bundles or tows 2 of continuous fibres (for example, glassfibre, carbon aramide, thermoplastic or other fibres) are impregnated with a suitable resin and are wound or laid in controlled helical patterns at a predetermined pitch and under controlled tension. This creates openings of a generally diamond shape between the impregnated fibres. The tension of the resin impregnated fibres is controlled in such a way that the resin is forced through the filter medium onto the supporting mandrel so as to impregnate those parts of the filter medium. As the resin sets, the fibres 2 become bonded to parts of the filter sheet 1 whilst leaving portions of filter material within the diamond openings. As an alternative, the fibres can be wound first onto the mandrel and then the layer of filter material can be laid over the top under tension so that the resin will soak up from underneath.

In the arrangement shown in Figure 2 the fibres are laid down firstly in longitudinal rows around the mandrel and secondly as circumferential rings, so as to create rectangular spaces.

It is also possible to build up several layers of filter fabric each sandwiched between impregnated fibres to form multi layer filters. In order to provide sufficient strength for the larger filters of say 6m diameter, multiple 'tows' of fibres can be introduced and a progressive build-up of the cage structure can be achieved by local reinforcement at strategic points. When these multiple 'tows' become large in cross section they tend to flatten out due to the controlled tension. This can be prevented by using a secondary winding operation which lays or winds another 'tow' of fibres circumferentially around the primary tow in advance of it being laid onto the mandrel. This effectively prevents the primary tow from spreading out due to the tension applied onto the surface of the mandrel. Local reinforcement may be particularly necessary at the ends and in the drawings this is illustrated at 3 where progressive build-up of fibres has been created.

## Claims

1. A method of forming a supported filter, wherein a layer of filter material is laid over a table or around a mandrel and individual bundles of resin impregnated fibres are laid over the filter member and overlaid over one another to create an open grid structure under controlled tension so that some of the resin is impregnated into the filter material, whereby the fibres create a support structure for the filter material, after curing.

2. A method of forming a supported filter, wherein individual bundles of resin impregnated fibres are laid over a table or around a mandrel and overlaid over one another to create an open grid structure under controlled tension and a layer of filter material is laid over the fibres under tension so that some of the resin is impregnated into the filter material, whereby the fibres create a support structure for the filter material, after curing.

3. A method as claimed in Claim 1 or Claim 2, wherein external pressure is applied to force the resin into the filter material.

4. A method as claimed in any one of Claims 1 to 3 wherein extra layers of filter material and/or support structure are built up onto the base construction of a layer of filter material and a support structure.

## Patentansprüche

1. Ein Verfahren zur Herstellung eines gestützten Filters, wobei eine Schicht aus Filtermaterial auf einen Tisch oder um eine Spule gelegt wird und individuelle Bündel aus mit Harz imprägnierten Fasern über das Filterelement und übereinander gelegt werden zur Erzeugung einer offenen Gitterstruktur unter gesteuerter Spannung derart, daß ein Teil des Harzes in das Filtermaterial hinein imprägniert wird, wodurch die Fasern eine gestützte Struktur für das Filtermaterial nach dem Aushärten erzeugen.

2. Ein Verfahren zur Herstellung eines gestützten Filters, wobei individuelle Bündel aus mit Harz imprägnierten Fasern auf einen Tisch oder um eine Spule sowie übereinander gelegt werden zur Erzeugung einer offenen Gitterstruktur unter gesteuerter Spannung und eine Schicht aus Filtermaterial über die unter Spannung stehenden Fasern gelegt wird derart, daß ein Teil des Harzes in das Filtermaterial hinein imprägniert wird, wodurch die Fasern eine gestützte Struktur für das Filtermaterial nach dem Aushärten bilden.

3. Ein Verfahren nach Anspruch 1 oder Anspruch 2, wobei ein äußerer Druck aufgebracht wird, um das Harz in das Filtermaterial hinein zu pressen.

4. Verfahren nach einem der Ansprüche 1 bis 3, wobei zusätzlich Schichten aus Filtermaterial und/oder der Stützstruktur auf dem Grundaufbau einer Schicht aus Filtermaterial und einer Stützstruktur aufgebaut werden.

## Revendications

1. Procédé de fabrication d'un filtre supporté, dans lequel une couche de matière de filtration est appliquée sur un plateau ou autour d'un mandrin et des faisceaux individuels de fibres imprégnées de résine sont appliqués sur l'élément de filtration et recouverts l'un sur l'autre afin de créer une structure de grille ouverte sous tension contrôlée, de telle sorte qu'une partie de la résine soit imprégnée dans la matière de filtration, ce par quoi les libres créent une structure de support pour la matière de filtration, après durcissement.

2. Procédé de fabrication d'un filtre supporté, dans lequel des faisceaux individuels de fibres imprégnées de résine sont appliquées sur un plateau ou autour d'un mandrin et recouverts l'un sur l'autre afin de créer une structure de grille ouverte sous tension contrôlée et une couche de matière de filtration est appliquée sur les libres sous tension de telle sorte qu'une partie de la résine soit imprégnée dans la matière de filtration, ce par quoi les libres créent une structure de support pour la matière de filtration, après durcissement.

3. Procédé selon la revendication 1 ou la revendication 2, dans lequel une pression externe est appliquée pour forcer la résine dans la matière de filtration.

4. Procédé selon l'une quelconque des revendications 1 à 3, dans lequel des couches supplémentaires de matière de filtration et/ou de structure de support sont rapportées sur la structure de base d'une couche de matière de filtration et d'une structure de support.
